# EUROPÄISCHE PATENTANMELDUNG

(11) **EP 4 497 963 A1**
(43) Veröffentlichungstag der Anmeldung: **29.01.2025**
(21) Anmeldenummer: 24187280.3
(22) Anmeldetag: 09.07.2024
(51) Int. Cl.: F16D 55/226, F16D 65/00, F16D 65/18, F16D 121/02, F16D 125/64, F16D 125/32

(54) **GLEITLAGERKOMPONENTE FÜR EINE ZUSPANNVORRICHTUNG EINER SCHEIBENBREMSE FÜR EIN FAHRZEUG, INSBESONDERE NUTZFAHRZEUG, BREMSSATTEL, SCHEIBENBREMSE UND FAHRZEUG**

(30) Priorität: 26.07.2023 DE 102023119861
(71) Anmelder: ZF CV Systems Europe BV, 1170 Brüssel (BE)
(72) Erfinder: JUNGMANN, Hans-Christian, 69181 Leimen (DE)
(74) Vertreter: Rabe, Dirk-Heinrich

(57) **Zusammenfassung**

Gleitlagerkomponente (100) für eine Zuspannvorrichtung (250) einer Scheibenbremse (220) für ein Fahrzeug (200a), insbesondere Nutzfahrzeug (200b), wobei die Gleitlagerkomponente (100) eine Mantelfläche (110) mit einem abschnittsweise vollkreisförmigen Querschnitt (115) aufweist, und die Gleitlagerkomponente (100) ein an der Mantelfläche (110) angeordnetes gleitlagerkomponentenseitiges Beschränkungselement (120) zum Beschränken einer Verschieblichkeit der Gleitlagerkomponente (100) aufweist.

## Beschreibung

Die Offenbarung betrifft eine Gleitlagerkomponente für eine Zuspannvorrichtung einer Scheibenbremse für ein Fahrzeug, insbesondere Nutzfahrzeug. Die Offenbarung betrifft auch einen Bremssattel zur Aufnahme einer Zuspannvorrichtung einer Scheibenbremse für ein Fahrzeug, insbesondere Nutzfahrzeug, eine Scheibenbremse für ein Fahrzeug, insbesondere Nutzfahrzeug, umfassend eine Gleitlagerkomponente und einen Bremssattel, und ein Fahrzeug, insbesondere Nutzfahrzeug, umfassend eine Scheibenbremse.

Derartige Scheibenbremsen sind aus dem Stand der Technik bekannt. Eine derartige Scheibenbremse weist eine Zuspannvorrichtung auf. Dabei können ein sogenannter Gleitstein als Gleitlagerkomponente und ein Hebellager als jeweils in Wirkverbindung miteinander bringbare Komponenten der Zuspannvorrichtung vorgesehen sein. Derartige Gleitlagerkomponenten sind im Stand der Technik bekannt. Gemäß dem Stand der Technik werden insbesondere bei Druckluftscheibenbremsen Funktionsflächen, insbesondere Gleitflächen, durch den Einsatz von derartigen Bauteilen realisiert und weisen im Falle eines Hebellagers typischerweise die Funktion auf, Gleitreibung zwischen den Gleitpartnern des Hebellagers zu vermindern.

EP 3 109 499 A1 offenbart eine Scheibenbremse, insbesondere für Nutzfahrzeuge, mit einer Bremsscheibe, einer Bremswelle, deren Drehachse parallel zu einer Hauptebene der Bremsscheibe liegt, einem bezüglich der Bremsscheibe auf derselben Seite wie die Bremswelle liegenden Bremsbelag, einem Druckstück zwischen der Bremswelle und dem Bremsbelag, einer ersten Beschränkungseinrichtung, die die Verschieblichkeit des Druckstücks bezüglich der Bremsscheibe in Richtung parallel zur Drehachse der Bremswelle auf ein vorbestimmtes erstes Maß beschränkt und einer zweiten Beschränkungseinrichtung, die die Verschieblichkeit der Bremswelle bezüglich der Bremsscheibe in Richtung parallel zur Drehachse der Bremswelle auf ein vorbestimmtes zweites Maß beschränkt, wobei die Bremswelle bei Betätigung das Druckstück und damit den Bremsbelag gegen die Bremsscheibe drückt. Die zweite Beschränkungseinrichtung weist einen ersten Anschlag an dem Druckstück und einen mit dem ersten Anschlag im Sinne eines Beschränkens der Verschieblichkeit zusammenwirkenden zweiten Anschlag an der Bremswelle auf. Die Abstützung der Bremswelle an dem Bremssattel kann prinzipiell in beliebiger Art und Weise ausgestaltet sein. Die Abstützung kann dabei über einen Gleitstein erfolgen. Ein solcher Gleitstein kann gegebenenfalls durch entsprechendes Gleiten ein Verklemmen der an der Zuspannung der Bremse beteiligten Elemente vermeiden. Weiter kann eine dritte Beschränkungseinrichtung vorgesehen sein, die die Verschieblichkeit des Gleitsteins bezüglich der Bremsscheibe in mindestens einer parallel zur Hauptebene der Bremsscheibe liegenden Richtung auf ein vorbestimmtes drittes Maß beschränkt. Eine solche Beschränkungseinrichtung kann insbesondere bei der Montage der Bremse hilfreich sein, nämlich beispielsweise als Verliersicherung für den Gleitstein. Dabei kann vorgesehen sein, dass die dritte Beschränkungseinrichtung einen Vorsprung aufweist, der in montiertem Zustand in eine Ausnehmung hineinragt.

EP 3 499 071 A1 offenbart eine Zuspannvorrichtung für eine Scheibenbremse, insbesondere für eine Gleitsattelscheibenbremse zum Zuspannen einer Bremsscheibe. Die Scheibenbremse weist zumindest einen Bremssattel zur Aufnahme der Zuspannvorrichtung und Bremsbeläge zum Zuspannen der Bremsscheibe auf. Weiterhin umfasst die Zuspannvorrichtung einen Zuspannhebel mit zumindest einem Zuspannhebelfuß. Der Zuspannhebelfuß weist in Richtung der dem Bremsbelag zugewandten Seite oder der dem Bremsbelag abgewandten Seite eine Vertiefung zur Aufnahme einer Lagerschale auf. Der Zuspannhebel ist innerhalb des Bremssattels der Scheibenbremse angeordnet und stützt sich an der dem Bremsbelag abgewandten Seite über zwei Gleitsteine an einer Innenwand des Bremssattels ab.

Die Befestigung des Gleitsteins als Gleitlagerkomponente ist zuverlässig. Jedoch ist die Herstellung des Gleitsteins und/oder der Innenwand des Bremssattels, an der sich der Gleitstein abstützt, aufgrund der Geometrie des Gleitsteins relativ aufwändig: der Gleitstein weist nämlich im Wesentlichen, also ohne Betrachtung der Beschränkungseinrichtung, einen kreissegmentförmigen Querschnitt auf. Somit weist der Gleitstein einen Querschnitt auf, der durch einen gekrümmten Kreisbogen und eine ebene Kreissehne begrenzt ist. Die Herstellung einer derartigen Gleitlagerkomponente weist somit eine verbesserungswürdige Kosteneffizienz auf.

Der Offenbarung liegt die Aufgabe zugrunde, den Stand der Technik zu bereichern und die oben genannten Aspekte wenigstens teilweise zu verbessern. Insbesondere löst die Offenbarung die Aufgabe, eine alternative Gleitlagerkomponente bereitstellen zu können, die eine effektivere Herstellung derselben und/oder eines Reibpartners ermöglicht.

Gemäß einem Aspekt der Offenbarung wird eine Gleitlagerkomponente für eine Zuspannvorrichtung einer Scheibenbremse für ein Fahrzeug, insbesondere Nutzfahrzeug, bereitgestellt, wobei die Gleitlagerkomponente eine Mantelfläche mit einem abschnittsweise vollkreisförmigen Querschnitt aufweist, und die Gleitlagerkomponente ein an der Mantelfläche angeordnetes gleitlagerkomponentenseitiges Beschränkungselement zum Beschränken einer Verschieblichkeit der Gleitlagerkomponente aufweist.

Dabei wurde erkannt, dass die Herstellung der Gleitlagerkomponente effektiver sein kann, wenn die Mantelfläche einen abschnittsweise vollkreisförmigen Querschnitt aufweist. Durch den vollkreisförmigen Querschnitt beziehungsweise die somit abschnittsweise zylindrische Form der Gleitlagerkomponente ist eine wesentlich effektivere Herstellung der Gleitlagerkomponente möglich.

Damit eine Bewegung der Gleitlagerkomponente ebenso zuverlässig wie im Stand der Technik beschränkt und/oder vermieden werden kann weist die Gleitlagerkomponente das gleitlagerkomponentenseitiges Beschränkungselement zum Beschränken einer Verschieblichkeit der Gleitlagerkomponente auf. Das Beschränkungselement kann dafür in Wirkverbindung mit einem bremssattelseitigen Beschränkungselement gebracht werden.

Optional weist das gleitlagerkomponentenseitige Beschränkungselement einen abschnittsweise vollkreisförmigen Querschnitt auf. Damit ist eine effektive Herstellung des Beschränkungselements möglich. Das Beschränkungselement kann von der Mantelfläche radial abragen, um mit dem bremssattelseitigen Beschränkungselement in Wirkverbindung gebracht werden zu können. Das Beschränkungselement kann ein von der Mantelfläche abragender Bolzen sein.

Optional weist die Gleitlagerkomponente einen zylindrischen Körper auf und das gleitlagerkomponentenseitige Beschränkungselement ist an den Körper geschweißt und/oder mit dem Körper kraftschlüssig verbunden. Damit ist eine sichere und zuverlässige Verbindung zwischen dem Körper und dem gleitlagerkomponentenseitigen Beschränkungselement möglich. Durch das Schweißen kann das gleitlagerkomponentenseitige Beschränkungselement an der Mantelfläche angeordnet werden. Zum kraftschlüssigen Verbinden kann der Körper eine Öffnung aufweisen, in der das gleitlagerkomponentenseitige Beschränkungselement wenigstens teilweise eingedrückt und so fixiert wird. Nach dem Eindrücken kann zwischen dem gleitlagerkomponentenseitige Beschränkungselement und der Öffnung in dem Körper eine Spannkraft wirken, die eine zuverlässige Befestigung des gleitlagerkomponentenseitigen Beschränkungselements in der Öffnung ermöglicht.

Optional weist die Gleitlagerkomponente eine Längsachse auf, und die Gleitlagerkomponente weist den vollkreisförmigen Querschnitt in einem entlang der Längsachse definierten Abschnitt auf. Dabei kann der Abschnitt insbesondere, in Richtung der Längsachse gesehen, außerhalb des gleitlagerkomponentenseitigen Beschränkungselements angeordnet sein. Die Gleitlagerkomponente ist in dem Abschnitt somit zylinderförmig. Außerhalb des Abschnitts kann die Form durch das gleitlagerkomponentenseitige Beschränkungselement von einer Zylinderform abweichen.

Gemäß einem Aspekt der Offenbarung wird ein Bremssattel zur Aufnahme einer Zuspannvorrichtung einer Scheibenbremse für ein Fahrzeug, insbesondere Nutzfahrzeug, bereitgestellt, wobei der Bremssattel ein Sockelabschnitt zum Anordnen der Gleitlagerkomponente aufweist, der Sockelabschnitt eine Ausnehmung aufweist, die Ausnehmung dazu eingerichtet ist, die Mantelfläche der Gleitlagerkomponente aufzunehmen, und der Sockelabschnitt ein bremssattelseitiges Beschränkungselement zum Beschränken einer Verschieblichkeit der Gleitlagerkomponente aufweist, wobei das bremssattelseitiges Beschränkungselement dazu eingerichtet ist, mit dem gleitlagerkomponentenseitigen Beschränkungselement zum Beschränken der Verschieblichkeit der Gleitlagerkomponente gegenüber dem Sockelabschnitt in Wirkverbindung gebracht zu werden, wobei die Ausnehmung abschnittsweise zylinderförmig und/oder durch zwei Ebenen definiert ist.

Der Bremssattel mit dem Sockelabschnitt mit der Ausnehmung ermöglicht ein effektives Abstützen der Gleitlagerkomponente. Die Ausnehmung kann dabei abschnittsweise zylinderförmig sein und eine an die Mantelfläche des Körpers der Gleitlagerkomponente angepasste Form aufweisen. Alternativ oder zusätzlich kann die Ausnehmung auch durch zwei Ebenen, insbesondere zueinander parallele Ebenen definiert sein. Die Ebenen definieren dann eine U-förmige Ausnehmung beziehungsweise Tasche, in der die Gleitlagerkomponente wenigstens teilweise angeordnet werden kann.

Optional ist das bremssattelseitige Beschränkungselement eine abschnittsweise vollkreisförmige Tasche. Damit kann ein gleitlagerkomponentenseitiges Beschränkungselement insbesondere mit einem vollkreisförmigen Querschnitt effektiv und zuverlässig in Wirkverbindung mit dem bremssattelseitigen Beschränkungselement gebracht werden, um zuverlässig eine Bewegung der Gleitlagerkomponente zu vermindern und/oder zu vermeiden.

Optional weist die Ausnehmung eine Längsachse auf, entlang derer sich der Sockelabschnitt erstreckt. Damit kann die Gleitlagerkomponente mit der Mantelfläche wohldefiniert und zuverlässig an dem Sockelabschnitt angeordnet und ausgerichtet werden.

Gemäß einem Aspekt der Offenbarung wird eine Scheibenbremse für ein Fahrzeug, insbesondere Nutzfahrzeug, umfassend die oben beschriebene Gleitlagerkomponente und den oben beschriebenen Bremssattel, bereitgestellt. Die Scheibenbremse beziehungsweise die Gleitlagerkomponente und/oder der Bremssattel umfasst optional ein oder mehrere der oben beschriebenen Merkmale, um einen damit verbundenen technischen Effekt zu bewirken.

Gemäß einem Aspekt der Offenbarung wird ein Fahrzeug, insbesondere Nutzfahrzeug, umfassend die oben beschriebene Scheibenbremse, bereitgestellt. Die Scheibenbremse des Fahrzeugs, insbesondere Nutzfahrzeugs, umfasst optional ein oder mehrere der oben beschriebenen Merkmale, um einen damit verbundenen technischen Effekt zu bewirken.

Weitere Merkmale der Offenbarung sowie deren technische Effekte ergeben sich aus den Figuren und der Beschreibung der in den Figuren gezeigten Ausführungsformen. Dabei zeigen
Fig. 1 eine schematische Darstellung eines Fahrzeugs, insbesondere Nutzfahrzeugs, gemäß einem Aspekt der Offenbarung;
Fig. 2 einen Schnitt durch ein eine Zuspannvorrichtung zeigendes Detail einer Scheibenbremse gemäß dem Stand der Technik;
Fig. 3 eine perspektivische Ansicht eines Details eines Bremssattels gemäß dem Stand der Technik;
Fig. 4 eine perspektivische Ansicht einer Gleitlagerkomponente gemäß dem Stand der Technik;
Fig. 5 einen Schnitt durch ein eine Zuspannvorrichtung zeigendes Detail einer Scheibenbremse gemäß einem Aspekt der Offenbarung;
Fig. 6 eine perspektivische Ansicht eines Details eines Bremssattels gemäß einem Aspekt der Offenbarung;
Fig. 7 eine perspektivische Ansicht einer Gleitlagerkomponente gemäß einem Aspekt der Offenbarung; und
Fig. 8 eine Seitenansicht einer Gleitlagerkomponente gemäß einem Aspekt der Offenbarung.

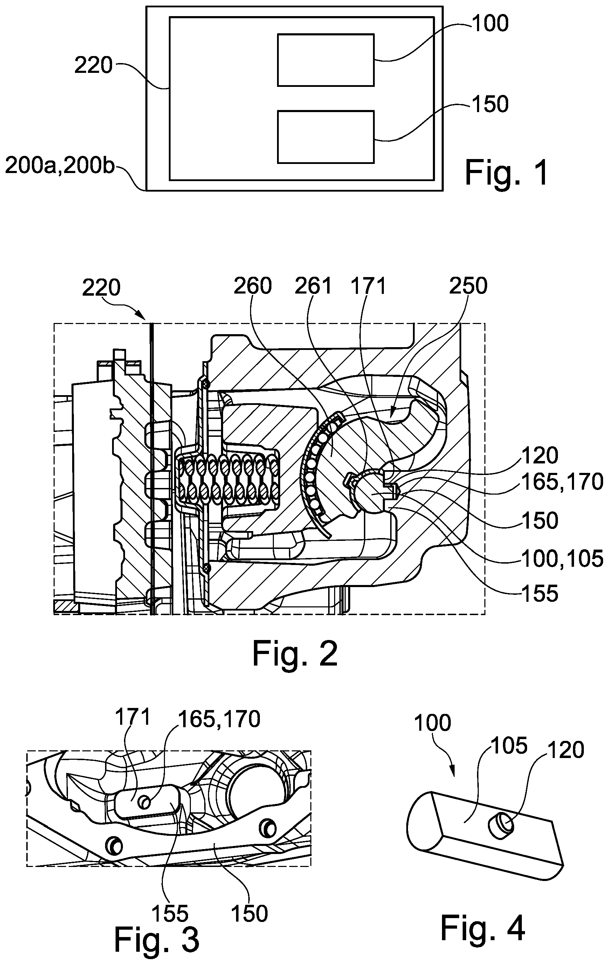

Figur 1 zeigt eine schematische Darstellung eines Fahrzeugs 200a, insbesondere Nutzfahrzeugs 200b, gemäß einem Aspekt der Offenbarung. Das Fahrzeug 200a, insbesondere Nutzfahrzeug 200b, wird im Folgenden als Fahrzeug 200a, 200b bezeichnet. Das Fahrzeug 200a, 200b ist ein Landfahrzeug, beispielsweise ein Zugfahrzeug und/oder ein Anhängefahrzeug eines mehrgliedrigen Fahrzeugs und/oder ein Bus.

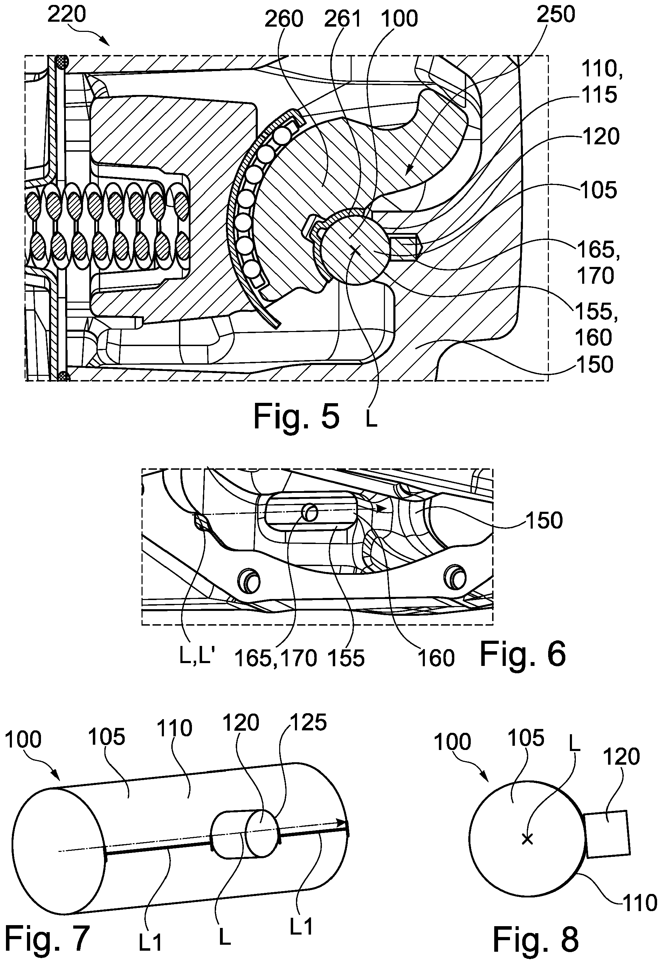

Das Fahrzeug 200a, 200b umfasst eine Scheibenbremse 220. Die Scheibenbremse 220 ist pneumatisch und/oder elektropneumatisch aktuierbar und dazu eingerichtet, eine Bewegung des Fahrzeugs 200a, 200b zu verzögern beziehungsweise das Fahrzeug 200a, 200b abzubremsen. Dafür kann die Scheibenbremse 220 ein Bremsmoment auf ein oder mehrere Räder (nicht gezeigt) des Fahrzeugs 200a, 200b bewirken. Die Scheibenbremse 220 umfasst dafür eine Zuspannvorrichtung 250 (siehe Figuren 2 und 5) zum Zuspannen von Bremsbelägen über einer Bremsscheibe (jeweils nicht gezeigt) als zum Verzögern des Fahrzeugs 200a, 200b in Wirkverbindung miteinander bringbare Reibpartner. Die Scheibenbremse 220 umfasst dafür eine Gleitlagerkomponente 100 und einen Bremssattel 150.

Der Bremssattel 150 kann insbesondere als Schwimm- und/oder Gleitsattel ausgebildet sein und somit gegenüber der Bremsscheibe bewegbar gelagert angeordnet sein. In einer anderen Ausführungsform kann der Bremssattel 150 als Festsattel ausgebildet sein und gegenüber der Bremsscheibe ortsfest angeordnet sein.

Eine Scheibenbremse 220, eine Gleitlagerkomponente 100 und einen Bremssattel 150 je gemäß dem Stand der Technik sind weiter mit Bezug zu Figuren 2 bis 4 beschrieben.

Eine Scheibenbremse 220, eine Gleitlagerkomponente 100 und einen Bremssattel 150 je gemäß einem Aspekt der Offenbarung sind weiter mit Bezug zu Figuren 5 bis 8 beschrieben.

Figur 2 zeigt einen Schnitt durch ein eine Zuspannvorrichtung 250 zeigendes Detail einer Scheibenbremse 220 gemäß dem Stand der Technik.

Die Zuspannvorrichtung 250 umfasst einen Hebel (nicht indiziert) mit einem Hebelfuß 260. An dem Hebelfuß 260 ist eine Lagerschale 261 angeordnet beziehungsweise befestigt.

Die Zuspannvorrichtung 250 beziehungsweise die Scheibenbremse 220 umfasst eine als Gleitstein ausgebildete Gleitlagerkomponente 100. Die Gleitlagerkomponente 100 und der Hebelfuß 260 beziehungsweise die Lagerschale 261 sind dazu eingerichtet, miteinander in Wirkverbindung zu stehen, um eine drehbare Lagerung des Hebelfußes 260 zu ermöglich und so eine Rotation des Hebelfußes 260 um die Gleitlagerkomponente 100 zu ermöglichen.

Die Gleitlagerkomponente 100 umfasst einen Körper 105, der in mechanischen Kontakt mit der Lagerschale 261 bringbar ist, und ein gleitlagerkomponentenseitiges Beschränkungselement 120 zum Beschränken einer Verschieblichkeit der Gleitlagerkomponente 100. Die Gleitlagerkomponente 100 weist einen Körper 105 mit einem teilkreisförmigen Querschnitt auf, wie in dem Schnitt in Figur 2 zu sehen ist, und somit eine teilzylinderförmige Kontur mit einer abschnittsweise zylinderförmigen und abschnittsweise ebenen Oberfläche.

Die Scheibenbremse 220 umfasst einen Bremssattel 150 zur Aufnahme der Zuspannvorrichtung 250. Dafür weist der Bremssattel 150 einen Sockelabschnitt 155 zum Anordnen der Gleitlagerkomponente 100 auf. Die Gleitlagerkomponente 100 und der Sockelabschnitt 155 sind dazu eingerichtet miteinander in Wirkverbindung gebracht zu werden, um die Gleitlagerkomponente 100 an dem Sockelabschnitt 155 abzustützen. Demgemäß ist der Sockelabschnitt 155 durch eine Ebene 171 definiert, an dem sich die Gleitlagerkomponente 100 insbesondere mit der abschnittsweise ebenen Oberfläche der Gleitlagerkomponente 100 abstützen kann.

Der Sockelabschnitt 155 weist ein bremssattelseitiges Beschränkungselement 165 zum Beschränken einer Verschieblichkeit der Gleitlagerkomponente 100 auf. Das bremssattelseitige Beschränkungselement 165 ist eine Vertiefung beziehungsweise eine Tasche 170 innerhalb des Sockelabschnitts 155. Dabei ist das bremssattelseitige Beschränkungselement 165 dazu eingerichtet, mit dem gleitlagerkomponentenseitigen Beschränkungselement 120 zum Beschränken der Verschieblichkeit der Gleitlagerkomponente 100 gegenüber dem Sockelabschnitt 155 in Wirkverbindung gebracht zu werden. Das gleitlagerkomponentenseitige Beschränkungselement 120 ist ein Stift, der in die Tasche 170 eingeführt werden kann, um die Gleitlagerkomponente 100 zu haltern.

Figur 3 zeigt eine perspektivische Ansicht eines Details eines Bremssattels 150 gemäß dem Stand der Technik. Figur 3 wird unter Bezugnahme auf Figur 2 beschrieben. Figur 3 illustriert dabei insbesondere den durch die Ebene 171 definierten Sockelabschnitt 155 mit der Tasche 170.

Figur 4 zeigt eine perspektivische Ansicht einer Gleitlagerkomponente 100 gemäß dem Stand der Technik. Figur 4 wird unter Bezugnahme auf Figuren 2 und 3 beschrieben. Figur 4 illustriert dabei insbesondere den Körper 105 der Gleitlagerkomponente 100 mit dem teilkreisförmigen Querschnitt und insbesondere der abschnittsweise ebenen Oberfläche der Gleitlagerkomponente 100.

Figur 5 zeigt einen Schnitt durch ein eine Zuspannvorrichtung 250 zeigendes Detail einer Scheibenbremse 220 gemäß einem Aspekt der Offenbarung. Eine derartige Scheibenbremse 220 ist mit Bezug zu Figur 1 beschrieben. Figur 5 wird unter Bezugnahme auf Figur 1 beschrieben. Figur 5 wird ferner unter Bezugnahme auf Figuren 2 bis 4 beschrieben, wobei die Unterschiede der Ausführungsform gemäß Figuren 2 bis 4 und der Ausführungsform gemäß Figur 5 beschrieben werden.

Die Gleitlagerkomponente 100 weist eine Mantelfläche 110 mit einem abschnittsweise vollkreisförmigen Querschnitt 115 auf. In dem in Figur 5 gezeigten Schnitt ist der Querschnitt 155, abgesehen von dem gleitlagerkomponentenseitigen Beschränkungselement 120, vollkreisförmig, also kreisrund. Damit ist die Gleitlagerkomponente 100, abgesehen von dem gleitlagerkomponentenseitigen Beschränkungselement 120, zylinderförmig.

Die Gleitlagerkomponente 100 weist das an der Mantelfläche 110 angeordnete gleitlagerkomponentenseitige Beschränkungselement 120 zum Beschränken einer Verschieblichkeit der Gleitlagerkomponente 100 auf. Das gleitlagerkomponentenseitige Beschränkungselement 120 weist einen abschnittsweise vollkreisförmigen Querschnitt 125 auf (siehe auch Figur 7). Das Beschränkungselement 120 ist ein Stift beziehungsweise ein Bolzen, der von der Mantelfläche 110 abragt.

Die Gleitlagerkomponente 100 weist den zylindrischen Körper 105 auf und das gleitlagerkomponentenseitige Beschränkungselement 120 ist an den Körper 105 geschweißt und/oder mit dem Körper 105 kraftschlüssig verbunden. Beispielsweise ist das gleitlagerkomponentenseitige Beschränkungselement 120 ein in eine Öffnung (nicht gezeigt) der Gleitlagerkomponente 100 gedrückter Stift beziehungsweise Bolzen.

Die Gleitlagerkomponente 100 weist eine Längsachse L auf. Die Längsachse L ragt in der in Figur 5 gezeigten Darstellung in die Bildebene hinein, wie schematisch durch ein Kreuz indiziert.

Der Sockelabschnitt 155 weist eine Ausnehmung 160 auf. Die Ausnehmung 160 ist dazu eingerichtet, die Mantelfläche 110 der Gleitlagerkomponente 100 aufzunehmen. Die Mantelfläche 110 ragt somit in den Sockelabschnitt 155 hinein. Die Ausnehmung 160 ist abschnittsweise zylinderförmig (siehe auch Figur 6) und/oder durch zwei Ebenen definiert (nicht gezeigt).

Das bremssattelseitige Beschränkungselement 165 ist eine abschnittsweise vollkreisförmige Tasche 170. Im montierten Zustand wie in Figur 5 gezeigt, ist das gleitlagerkomponentenseitige Beschränkungselement 120 wenigstens teilweise in dem bremssattelseitigen Beschränkungselement 165 angeordnet.

Figur 6 zeigt eine perspektivische Ansicht eines Details eines Bremssattels 150 gemäß einem Aspekt der Offenbarung. Figur 6 zeigt dabei den mit Bezug zu Figur 5 beschriebenen Bremssattel 150. Figur 6 ist mit Bezugnahme auf Figuren 1 bis 5 beschrieben.

Die Ausnehmung 160 weist eine Längsachse L' auf. Entlang der Längsachse L` der Ausnehmung 160 erstreckt sich der Sockelabschnitt 155. Im montierten Zustand fallen die Längsachse L` der Ausnehmung 160 und die Längsachse L der Gleitlagerkomponente 100 zusammen.

Figur 7 zeigt eine perspektivische Ansicht einer Gleitlagerkomponente 100 gemäß einem Aspekt der Offenbarung. Figur 7 zeigt dabei die mit Bezug zu Figur 5 beschriebene Gleitlagerkomponente 100. Figur 7 ist mit Bezugnahme auf Figuren 1 bis 6 beschrieben.

Wie in Figur 7 gezeigt weist die Gleitlagerkomponente 100 den vollkreisförmigen Querschnitt 115 in einem entlang der Längsachse L definierten Abschnitt L1 auf. Der Körper 105 der Gleitlagerkomponente 100 ist somit im Wesentlichen zylinderförmig: in Längsrichtung L. Außerhalb des gleitlagerkomponentenseitigen Beschränkungselements 120 ist die Gleitlagerkomponente 100 zylinderförmig.

Figur 8 zeigt eine Seitenansicht einer Gleitlagerkomponente 100 gemäß einem Aspekt der Offenbarung. Figur 8 zeigt dabei die mit Bezug zu Figur 5 beschriebene Gleitlagerkomponente 100. Figur 8 verdeutlicht die mit Bezug zu Figur 5 beschriebenen Merkmale der Gleitlagerkomponente 100 weiter.

### Bezugszeichen (Teil der Beschreibung)

- 100: Gleitlagerkomponente
- 105: Körper
- 110: Mantelfläche
- 115: Querschnitt
- 120: gleitlagerkomponentenseitiges Beschränkungselement
- 125: Querschnitt
- 150: Bremssattel
- 155: Sockelabschnitt
- 160: Ausnehmung
- 165: bremssattelseitiges Beschränkungselement
- 170: Tasche
- 171: Ebene
- 200a: Fahrzeug
- 200b: Nutzfahrzeug
- 220: Scheibenbremse
- 250: Zuspannvorrichtung
- 260: Hebelfuß
- 261: Lagerschale

- L: Längsachse
- L`: Längsachse
- L1: Abschnitt

## Patentansprüche

1. Gleitlagerkomponente (100) für eine Zuspannvorrichtung (250) einer Scheibenbremse (220) für ein Fahrzeug (200a), insbesondere Nutzfahrzeug (200b), wobei
- die Gleitlagerkomponente (100) eine Mantelfläche (110) mit einem abschnittsweise vollkreisförmigen Querschnitt (115) aufweist, und
- die Gleitlagerkomponente (100) ein an der Mantelfläche (110) angeordnetes gleitlagerkomponentenseitiges Beschränkungselement (120) zum Beschränken einer Verschieblichkeit der Gleitlagerkomponente (100) aufweist.

2. Gleitlagerkomponente (100) nach Anspruch 1, wobei
- das gleitlagerkomponentenseitige Beschränkungselement (120) einen abschnittsweise vollkreisförmigen Querschnitt (125) aufweist.

3. Gleitlagerkomponente (100) nach Anspruch 1 oder 2, wobei
- die Gleitlagerkomponente (100) einen zylindrischen Körper (105) aufweist, und
- das gleitlagerkomponentenseitige Beschränkungselement (120) an den Körper (105) geschweißt und/oder mit dem Körper (105) kraftschlüssig verbunden ist.

4. Gleitlagerkomponente (100) nach einem der vorherigen Ansprüche, wobei
- die Gleitlagerkomponente (100) eine Längsachse (L) aufweist, und
- die Gleitlagerkomponente (100) den vollkreisförmigen Querschnitt (115) in einem entlang der Längsachse (L) definierten Abschnitt (L1) aufweist.

5. Bremssattel (150) zur Aufnahme einer Zuspannvorrichtung (250) einer Scheibenbremse (220) für ein Fahrzeug (200a), insbesondere Nutzfahrzeug (200b), wobei
- der Bremssattel (150) ein Sockelabschnitt (155) zum Anordnen der Gleitlagerkomponente (100) aufweist,
- der Sockelabschnitt (155) eine Ausnehmung (160) aufweist,
- die Ausnehmung (160) dazu eingerichtet ist, die Mantelfläche (110) der Gleitlagerkomponente (100) aufzunehmen,
- der Sockelabschnitt (155) ein bremssattelseitiges Beschränkungselement (165) zum Beschränken einer Verschieblichkeit der Gleitlagerkomponente (100) aufweist, und
- das bremssattelseitiges Beschränkungselement (165) dazu eingerichtet ist, mit dem gleitlagerkomponentenseitigen Beschränkungselement (120) zum Beschränken der Verschieblichkeit der Gleitlagerkomponente (100) gegenüber dem Sockelabschnitt (155) in Wirkverbindung gebracht zu werden, wobei
- die Ausnehmung (160) abschnittsweise zylinderförmig und/oder durch zwei Ebenen definiert ist.

6. Bremssattel (150) nach Anspruch 5, wobei das bremssattelseitige Beschränkungselement (165) eine abschnittsweise vollkreisförmige Tasche (170) ist.

7. Bremssattel (150) nach einem der Ansprüche 5 oder 6, wobei die Ausnehmung (160) eine Längsachse (L) aufweist, entlang derer sich der Sockelabschnitt (155) erstreckt.

8. Scheibenbremse (220) für ein Fahrzeug (200a), insbesondere Nutzfahrzeug (200b), umfassend eine Gleitlagerkomponente (100) nach einem der Ansprüche 1 bis 4 und einen Bremssattel (150) nach einem der Ansprüche 5 bis 7.

9. Fahrzeug (200a), insbesondere Nutzfahrzeug (200b), umfassend eine Scheibenbremse (220) nach Anspruch 8.
